# EUROPEAN PATENT APPLICATION

(11) **EP 4 734 410 A1**
(43) Date of publication of application: **29.04.2026**
(21) Application number: 24306806.1
(22) Date of filing: 25.10.2024
(51) Int. Cl.: H04L 1/00, H04B 1/10, H04B 17/345, H04L 25/08

(54) **MITIGATING INTERFERENCE IN UWB COMMUNICATION SYSTEMS**

(71) Applicant: NXP B.V., 5656 AG Eindhoven (NL)
(72) Inventor: MARTINEZ, Vincent Pierre, 31100 TOULOUSE (FR); LEONG, Frank, 5656 AG Eindhoven (NL)
(74) Representative: Hardingham, Christopher Mark

(57) **Abstract**

Systems and method for encoding and decoding ultra-wide band (UWB) communication signals, wherein encoding includes block interleaving at either bit-level or symbol-level following convolutional encoding, and wherein decoding includes block de-interleaving UWB symbols or log-likelihood ratios (LLRs) prior to convolutional decoding. Decoding may further include detecting and nulling (or lowering) outlier UWB symbols or LLRs determined to be affected by interference, prior to block de-interleaving.

## Description

### TECHNICAL FIELD

The present disclosure relates to apparatus, systems and methods for mitigating the impact of interference in Ultra-Wide Band (UWB) communication systems.

### BACKGROUND

UWB communication signals is used by a variety of different applications, including automotive applications (such as for car access, in-cabin child presence detection, or data-communication oriented systems) but also industrial applications (e.g. location tracking tags) or Internet of Things/Smart Home (e.g. spatial audio, find-my-phone, building access).

Recently, there have been proposal to increase the frequency range of UWB communication signals, for radar and other uses, due to "overcrowding" at the lower frequency range of communications. This potentially increases the number and/or changes the type of interference sources that may be encountered by UWB communication systems. There is therefore a need to improve the resilience of UWB communication systems to sporadic high-power interference.

### SUMMARY

Aspects of the present disclosure are set out in the accompanying independent and dependent claims. Combinations of features from the dependent claims may be combined with features of the independent claims as appropriate and not merely as explicitly set out in the claims.

According to a first aspect of the present disclosure, there is provided an encoder for encoding UWB communication signals for transmission, the encoder comprising a convolutional encoder configured to output a plurality of bits in a first sequence, a symbol mapper, wherein the symbol mapper is configured to convert the plurality of bits into a plurality of UWB symbols, and a block interleaver.

In some embodiments, the block interleaver is configured to receive the plurality of bits output by the convolutional encoder in the first sequence, interleave the plurality of bits to generate a second sequence that is different to the first sequence, and output, to the symbol mapper, the plurality of bits in the second sequence.

Thus, the block interleaving may occur at bit-level before the plurality of bits are received at the symbol mapper.

In other embodiments, the block interleaver is configured to receive the plurality of UWB symbols output by the symbol mapper in the first sequence, interleave the plurality of UWB symbols to generate a second sequence that is different to the first sequence, and output the plurality of UWB symbols in the second sequence.

Thus, the block interleaving may occur at symbol level and after the plurality of bits have been converted to UWB symbols by the symbol mapper.

Throughout the present disclosure, the UWB communication signals and the UWB symbols may be based on the IEEE 802.15.4(z) standard.

The convolutional encoder may be any binary linear encoder of rate 1/N (N being an integer), punctured or unpunctured, and of depth K, such as the convolutional encoder of rate ½ and depth K=7 defined in the IEEE 802.15.4(z) standard. It will be appreciated that the convolutional encoder is not limited to this particular example.

The block interleaver may be any type of block interleaver known in the art.

Optionally, the block interleaver is configured to interleave the plurality of bits or the plurality of UWB symbols using a pattern. This may be called an interleaver pattern.

Optionally, the block interleaver is a matrix interleaver.

Optionally, the block interleaver is a random or a pseudo random interleaver.

According to a second aspect of the present disclosure, there is provided a decoder for decoding received UWB communication signals.

The decoder comprises a symbol demodulator, wherein the symbol demodulator is configured to convert a plurality of UWB symbols received to a plurality of log-likelihood ratios.

In some embodiments, a block de-interleaver is configured to receive the plurality of log-likelihood ratios in a first sequence, de-interleave the plurality of log-likelihood ratios to generate a second sequence that is different to the sequence, and output the plurality of log-likelihood ratios in the second sequence, and a convolutional decoder configured to receive the plurality of log-likelihood ratios in the second sequence and to convert the log-likelihood ratios into a plurality of bits.

In other embodiments, the block de-interleaver may be operatively positioned before the symbol demodulator. Thus, the block de-interleaver may be configured to receive a plurality of UWB symbols in a first sequence, de-interleave the plurality of UWB symbols to generate a second sequence that is different to the sequence, and output the plurality of UWB symbols in the second sequence to the symbol demodulator. The symbol demodulator is then arranged to output the plurality of log-likelihood rations to the convolutional decoder, the convolutional decoder configured to receive the plurality of log-likelihood ratios in the second sequence and to convert the log-likelihood ratios into a plurality of bits.

It will be appreciated that the decoder essentially reverses the encoding applied by the encoder. Thus, the block de-interleaver is configured to reverse the interleaving pattern applied at the encoder by the block interleaver.

Optionally, the block de-interleaver is configured to de-interleave the plurality of UWB symbols, or log-likelihood ratios, or the processed log-likelihood ratios, using a pattern. The pattern may be considered to be the reverse of the pattern applied by the block interleaver.

Optionally, the block de-interleaver is a matrix de-interleaver.

Optionally, the block de-interleaver is a random or a pseudo random de-interleaver.

The convolutional decoder may be a Viterbi decoder.

Optionally, the decoder further comprises an interference detector. This may be referred to as an interference detector and nuller, or an interference mitigator.

The interference detector may be operatively positioned before the block de-interleaver. The interference detector may be configured to receive the plurality of log-likelihood ratios from the symbol demodulator, process said log-likelihood ratios, and output processed log-likelihood ratios to the block de-interleaver.

The interference detector may be configured to process the plurality of log-likelihood ratios to determine any outliers indicative of interference.

In another embodiment, wherein the block de-interleaver is operatively positioned before the symbol demodulator, the interference detector may be configured to receive the plurality of UWB symbols, process said UWB symbols, and output processed UWB symbols to the block de-interleaver.

The interference detector may be configured to lower or null any determined outliers.

To process said log-likelihood ratios, or UWB symbols, to determine any outliers indicative of interference, the interference detector may be configured to analyse a received signal strength indicator (RSSI) of each log-likelihood ratio or UWB symbol. The received signal strength indicator may be based on the received UWB symbol power.

To process said log-likelihood ratios to determine any outliers indicative of interference, the interference detector may be configured to analyse an absolute value of each log-likelihood ratio. Optionally, the interference detector may be configured to determine whether an absolute value of each log-likelihood ratio is within a given tolerance of an acceptable value, the acceptable value being derived from statistical analysis.

In response to a log-likelihood ratio being outside of the given tolerance of the acceptable value, said log-likelihood value may be determined to be an outlier. The interference detector may be configured to lower or null said log-likelihood ratio.

To process said log-likelihood ratios to determine any outliers indicative of interference, the interference detector may be configured to determine whether a series of consecutive log-likelihood ratio values are within a given tolerance of a first acceptable value or a second acceptable value, the first and second acceptable values being derived from statistical analysis.

In response to a log-likelihood ratio, of the series of consecutive log-likelihood ratio values, being outside of the given tolerance of both the first acceptable value and the second acceptable value, said log-likelihood value may be determined to be an outlier. The interference detector may be configured to lower or null said log-likelihood ratio.

According to a third aspect of the present disclosure, there is provided an UWB communication system comprising: an encoder according to any embodiment or example of the first aspect of this disclosure; and a decoder according to any embodiment or example of the second aspect of this disclosure.

It will be appreciated that there are a variety of possible applications of said UWB communication system, including (but not limited to) automotive applications (such as for car access, in-cabin child presence detection, or data-communication oriented systems), industrial applications (such as location tracking tags) or Internet of Things/Smart Home (e.g. spatial audio, find-my-phone, building access, etc.).

Optionally, the UWB communication system may be configured for use within a vehicle.

According to a fourth aspect of the present disclosure, there is provided a battery management system for an electric vehicle, the battery management system comprising the UWB communication system of any embodiment or example of the third aspect of this disclosure.

According to a fifth aspect of the present disclosure, there is provided method of encoding UWB communication signals for transmission.

In some embodiments, the method comprises outputting a plurality of bits in a first sequence from a convolutional encoder; receiving the plurality of bits in the first sequence at a block interleaver; interleaving the plurality of bits to generate a second sequence that is different to the first sequence; outputting the plurality of bits in the second sequence from the block interleaver to a symbol mapper; and converting, at the symbol mapper, the plurality of bits into a plurality of UWB symbols.

In other embodiments, the method comprises outputting a plurality of bits in a first sequence from a convolutional encoder; converting the plurality of bits into a plurality of UWB symbols using a symbol mapper; receiving the plurality of UWB symbols in the first sequence at a block interleaver; interleaving the plurality of UWB symbols to generate a second sequence that is different to the first sequence; and outputting the plurality of UWB symbols in the second sequence.

Thus, as explained in connection with the first aspect of this disclosure, the block interleaving may take place before or after the bits have been converted into UWB symbols.

Optionally, the plurality of bits or the plurality of UWB symbols may be interleaved using a pattern. This may be called an interleaver pattern.

Optionally, the block interleaver is a matrix interleaver.

Optionally, the block interleaver is a random or a pseudo random interleaver.

According to a sixth aspect of the present disclosure, there is provided method of decoding received UWB communication signals.

The method may comprise receiving, at a symbol demodulator, a plurality of UWB symbols in a first sequence; converting the plurality of UWB symbols into to a plurality of log-likelihood ratios; receiving, at a block de-interleaver, the plurality of log-likelihood ratios in the first sequence; de-interleaving the plurality of log-likelihood ratios to generate a second sequence that is different to the first sequence; and outputting the plurality of log-likelihood ratios in the second sequence from the block interleaver to a convolutional decoder.

In another embodiment, the method may comprise receiving, at a block de-interleaver, a plurality of UWB symbols in a first sequence; de-interleaving the plurality of UWB symbols to generate a second sequence that is different to the first sequence; outputting the plurality of UWB symbols in the second sequence from the block de-interleaver to a symbol demodulator; converting, at the symbol demodulator, the plurality of UWB symbols into to a plurality of log-likelihood ratios; and outputting the plurality of log-likelihood ratios to a convolutional decoder.

The method may be carried out using any embodiment or example of the decoder of the second aspect of this disclosure.

Optionally, an interference detector may be operatively positioned before the block de-interleaver.

Optionally, wherein the block de-interleaver is operatively positioned after the symbol demodulator, the method further comprises receiving, from the symbol demodulator, the plurality of log-likelihood ratios at an interference detector.

The method may further comprise processing the plurality of log-likelihood ratios, or UWB symbols, at the interference detector to determine any outliers indicative of interference.

The method may further comprise lowering or nulling any determined outliers.

The method may further comprise outputting processed log-likelihood ratios, or processed UWB symbols, to the block de-interleaver.

Optionally, said processing comprises determining whether a series of consecutive log-likelihood ratios is within a given tolerance of a first acceptable value or a second acceptable value, the first and second acceptable values being derived from statistical analysis.

In response to a log-likelihood ratio being outside of the given tolerance of both the first acceptable value and the second acceptable value, the method may comprise lowering or nulling said log-likelihood ratio.

Optionally, said processing comprises analysing a received signal strength indicator (RSSI) of each log-likelihood ratio or UWB symbol. The received signal strength indicator may be based on the received UWB symbol power.

Optionally, said processing may comprise analysing an absolute value of each log-likelihood ratio. Optionally, the interference detector may be configured to determine whether an absolute value of each log-likelihood ratio is within a given tolerance of an acceptable value, the acceptable value being derived from statistical analysis.

In response to a log-likelihood ratio being outside of the given tolerance of the acceptable value, said log-likelihood value may be determined to be an outlier.

It will be appreciated that in the context of this disclosure "nulling" means removing, or setting to zero, or multiplying by zero.

It will be appreciated that in the context of this disclosure "lowering" means reducing the value of the log-likelihood ration, but not necessarily to zero. In some embodiments, "lowering" may comprise multiplying by a value between 0 and 1.

Optionally, the method further comprises converting, at the convolutional decoder, the plurality of log-likelihood ratios to a plurality of bits.

### BRIEF DESCRIPTION OF THE DRAWINGS

Embodiments of this disclosure will be described hereinafter, by way of example only, with reference to the accompanying drawings in which like reference signs relate to like elements and in which:
**Figure 1** shows a prior art example of a UWB communication system;
**Figure 2** shows a packet structure for a UWB communication signal with interference present;
**Figure 3** is a block diagram of an UWB communication system and method according to an embodiment of this disclosure;
**Figure 4** is a block diagram of an UWB communication system and method according to another embodiment of this disclosure;
**Figure 5** is an illustrative example of log-likelihood ratios received by an interference detector according to an embodiment of this disclosure;
**Figure 6** is an illustrative example of processed log-likelihood ratios output by an interference detector according to an embodiment of this disclosure;
**Figure 7** is an illustrative example of de-interleaved processed log-likelihood ratios according to an embodiment of this disclosure;
**Figure 8** is an illustrative example of how an interference detector processes log-likelihood ratios according to an embodiment of this disclosure; and
**Figure 9** is an illustrative example of how an interference detector processes log-likelihood ratios according to an embodiment of this disclosure.

### DETAILED DESCRIPTION

Embodiments of this disclosure are described in the following with reference to the accompanying drawings.

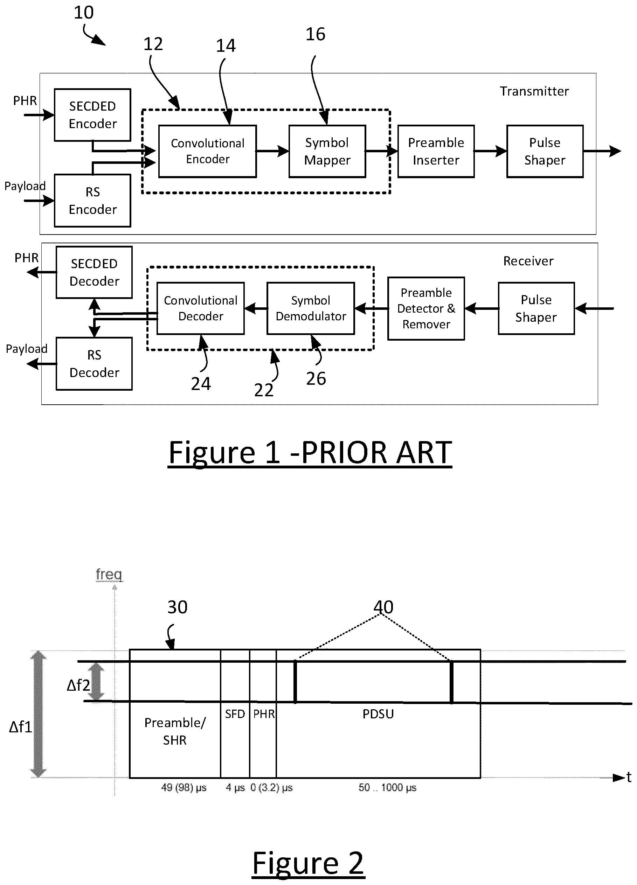

Figure 1 is a prior art example of an Ultra-Wide Band (UWB) communication system 10. It will be appreciated that this is a functional block diagram, but each block does not necessarily represent a different hardware component. Instead, the system 10 can be implemented using one or more data processors.

The system 10 includes a transmitter and a receiver. The transmitter includes an encoder 12 configured to encode UWB communication signals for transmission. The receiver includes a decoder 22 configured to decode received UWB communication signals.

The encoder 12 comprises a convolutional encoder 14 and a symbol mapper 16. The convolutional encoder 14 may be called a Viterbi encoder. The convolutional encoder 14 encodes a bit-level (or binary) input message or code using convolutional or Viterbi encoding techniques. The convolutional encoder 14 makes the input message or code more robust. The symbol mapper 16 receives the bits output by the convolutional encoder 14 and converts said bits into UWB symbols.

It will be appreciated that the encoder 12 may comprise other components of the transmitter. For example, in Figure 1, prior to the convolutional encoder, the transmitter also comprises a SECDED (single-error correcting and double-error detecting) encoder, configured to encode the physical layer header (PHR) of a data packet, and an RS (Reed-Solomon) encoder, configured to encode a payload of a data packet. Either of, or both of, these components may form part of the encoder 12.

In addition, following the symbol mapper 16, the transmitter comprises a preamble inserter and a pulse shaper. Either of, or both of, these components may form part of the encoder 12. It will be appreciated that in some embodiments the preamble inserter can also insert a start frame delimiter (SFD) and/or a physical layer header (PHR).

The decoder 22 essentially reverses the encoding applied by the encoder 12. Thus, the decoder 22 comprises a symbol demodulator 26 and a convolutional decoder 24. The symbol demodulator 26 is configured to convert a plurality of UWB symbols received to a plurality of log-likelihood ratios (LLRs). The convolutional decoder 24 is configured to receive the LLRs from the symbol demodulator 26 and apply convolutional or Viterbi decoding techniques to output a plurality of bits (or a binary code).

It will be appreciated that the decoder 22 may comprise other components of the receiver. For example, in Figure 1, prior to the symbol demodulator 26, the receiver comprises a pulse shaper and a preamble detector and remover. Either of, or both of, these components may form part of the decoder 22. It will be appreciated that in some embodiments the preamble detector and remover can also detect and remove a start frame delimiter (SFD) and/or a physical layer header (PHR).

In addition, following the convolutional decoder 24, the receiver in Figure 1 comprises a SECDED (single-error correcting and double-error detecting) decoder, configured to decode the physical layer header (PHR) of received data packets, and an RS (Reed-Solomon) decoder, configured to decode payloads of received data packets. Either of, or both of, these components may form part of the decoder 22.

The UWB communication system 10 shown in Figure 1 is not resilient to high-power sporadic interference. In practice, if the convolutional decoder 24 receives a few consecutive noisy input symbols (e.g. a dozen - where the actual number depends on the encoding rate and the convolutional encoding depth, "K") this can lead to a packet decoding error, and the entire packet being lost, even if there is a good signal-to-noise ratio over the entire packet when considered as a whole.

An example of a typical packet structure 30 transmitted by a UWB communication signals is shown in Figure 2. The packet 30 comprises a preamble, a start frame delimiter (SFD), a physical layer header (PHR) and a physical service data unit (PSDU). This packet structure 30 is well known in the art. For UWB communication signals, a bandwidth Δf1 of the signal or packet is often approximately 500 MHz.

In Figure 2, two interference signals 40 are encountered during the transmission of the PSDU, each interference signal 40 having a pulse duration of approximately 2.5 µs and a pulse repetition interval (time between adjacent pulses) of 0.33ms. These interference signals 40 can originate from a number of different types of sources, as there are an increasing number of competing sources operating in the same, or similar, channel frequencies as UWB communication signals (e.g. as defined in the EEE 802.15.4(z) standard). Examples of such sources include military radars, weather radars and level probing radars (LPR). These interference signals 40 can corrupt a sufficient number of consecutive bits of the PSDU to result in loss of the packet 30 at the receiver.

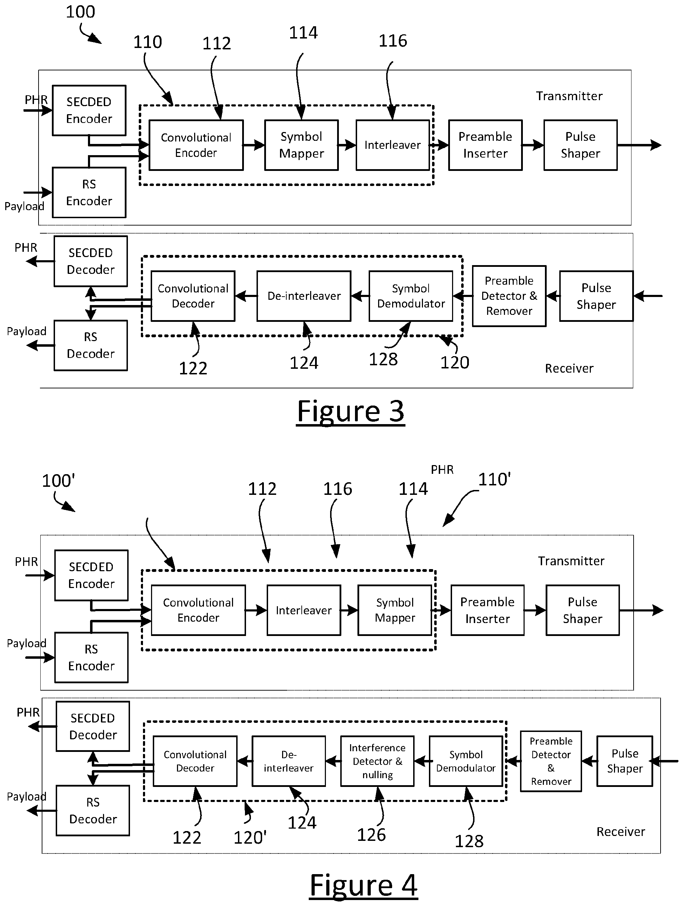

An UWB communication system 100 according to an embodiment of this disclosure that seeks to improve resilience to high-power sporadic interference is shown in Figure 3. The system 100 comprises an encoder 110 and a decoder 120. Features that are common between Figures 1 and 3 are not described for the sake of brevity. It will be appreciated that Figure 3 is a functional block diagram, also representing a method of this disclosure, and each block is not necessarily implemented by a separate piece of hardware. In some embodiments, the system 100 may be implemented by a single data processing unit or device. As stated previously, the encoder 110 and the decoder 120 may comprise additional components of the transmitter and receiver respectively, such as one or more of the other components shown in system 1100 in Figure 3.

In Figure 3, the encoder 110 comprises a convolutional encoder 112 and a symbol mapper 116, as described in connection with Figure 1. However, the encoder 110 further comprises a block interleaver 116 positioned after the symbol mapper 116. In this embodiment, the symbol mapper 116 is configured to output UWB symbols in a first sequence (i.e. a consecutive sequence), which is the same sequence as the bits output by the convolutional encoder 112. The block interleaver 116 is configured to interleave or shuffle an order of the UWB symbols, such that they are rearranged into a second sequence (i.e. out of sequence).

Similarly, the decoder 120 comprises a block de-interleaver 124 provided (or positioned) between the symbol demodulator 128 and the convolutional decoder 122. The block de-interleaver 124 is configured to receive a plurality of LLRs output by the symbol demodulator 128 is a first sequence (i.e. out of sequence as output by the encoder 110), and to de-interleave the order of the LLRs such that they are now back in sequence (i.e. arrive back at the sequence output by the convolutional encoder 112).

In other embodiments, the block de-interleaver 124 may be provided before the symbol demodulator 128, such that the block de-interleaver 124 acts on the UWB symbols received.

It will be appreciated that any interference that is encountered after (or during) transmission of the UWB communication signal will affect consecutive UWB symbols, as transmitted. Accordingly, as the block interleaver 116 reorders the UWB symbols from a first sequence to a second sequence, and the block de-interleaver 124 restores the UWB symbols (or their associated LLR values) to the first sequence, any consecutive received UWB symbols (or their associated LLR values) that have been affected by interference will no longer be consecutive after being de-interleaved by the block de-interleaver 124. Instead, the effected UWB symbols (or their associated LLR values) will be distributed in time across the sequence/series of values. Thus, the number of consecutive UWB symbols (or their associated LLR values) received at the convolutional decoder 122 that have been affected by interference is reduced, decreasing the risk of the packet being lost due to high-power sporadic interference.

The block interleaver 114 may be any type of block interleaver known in the art, and the block de-interleaver 124 may be the corresponding de-interleaver. In some embodiments, the block interleaver 114 may be a matrix interleaver, which interleaves an input sequence into a matrix comprising a given number of columns and rows. For example, as shown below:

### Block Interleaver Examples

*The output from the symbol mapper 114 is a consecutive series of UWB symbols. In the interest of simplicity, this can be represented as a string of consecutive numbers:*
*1 2 3 4 5 6 7 8 9 10 11 12 13 14 15....N*

*If the matrix interleaver was a 4 row, 8 column matrix, the UWB received would be input into the matrix as follows:*

| | | | | | | | |
|---|---|---|---|---|---|---|---|
| 1 | 2 | 3 | 4 | 5 | 6 | 7 | 8 |
| 9 | 10 | 11 | 12 | 13 | 14 | 15 | 16 |
| 17 | 18 | 19 | 20 | 21 | 22 | 23 | 24 |
| 25 | 26 | 27 | 28 | 29 | 30 | 31 | 32 |

*The output sequence of UWB symbols from the interleaver would be output column by column, rather than row by row. In this example the output sequence would be:*
1 9 17 25 2 **10 18 26** 3 11 19 27...8 16 24 32

*Accordingly, if UWB symbols in bold above, 10, 18, 26, are affected by an interference source, as these UWB symbols are consecutive in the output transmission, when the block de-interleaver reorders the UWB symbols to the original sequence (i.e. 1 2 3 4...N) then symbols 10, 18, 26 are no longer consecutive, and the convolutional decoder 122 is sufficiently robust to process the packet, such that the interference does not result in loss of the packet.*

*In other embodiments, the block interleaver 114 may be a random or pseudo random interleaver, of the block interleaver 114 may interleave the UWB symbols in accordance with any known pattern.*

In other embodiments, as shown in the UWB communication system 100' in Figure 4, the block interleaver 114 may be provided before the symbols mapper 116, such that the block interleaver 114 acts at bit-level rather than symbol level. Accordingly, the block interleaver 114 may act on the bits (or binary code) output by the convolutional encoder 112, such that interleaving occurs before the bits are converted into UWB symbols by the symbol mapper 116.

In addition, as shown in Figure 4, in some embodiments the decoder 120' comprises an interference detector 126. It will be appreciated that the decoder 120' could equally be combined with the encoder 120 of Figure 3 in other embodiments of the system according to the present disclosure.

In this embodiment, the interference detector 126 is operatively positioned between the symbol demodulator 128 and the block de-interleaver 124. The interference detector 126 is configured to process the log-likelihood ratios (LLRs) output by the symbol demodulator 128, to identify any outliers indicative of interference, to null or lower said outliers and to output said processed LLRs to the block de-interleaver 124. Thus, the interference detector 126 is configured to reduce the impact of any LLRs affected by interference before the de-interleaving takes place.

It will be appreciated that the interference detector 126 is operatively positioned before the block de-interleaver 124. Thus, in other embodiments, both the interference detector 126 and the block de-interleaver 124 are operatively positioned before the symbol demodulator 128, such that the interference detector 126 processes the UWB symbols to identify any outliers indicative of interference and null or lower said outliers.

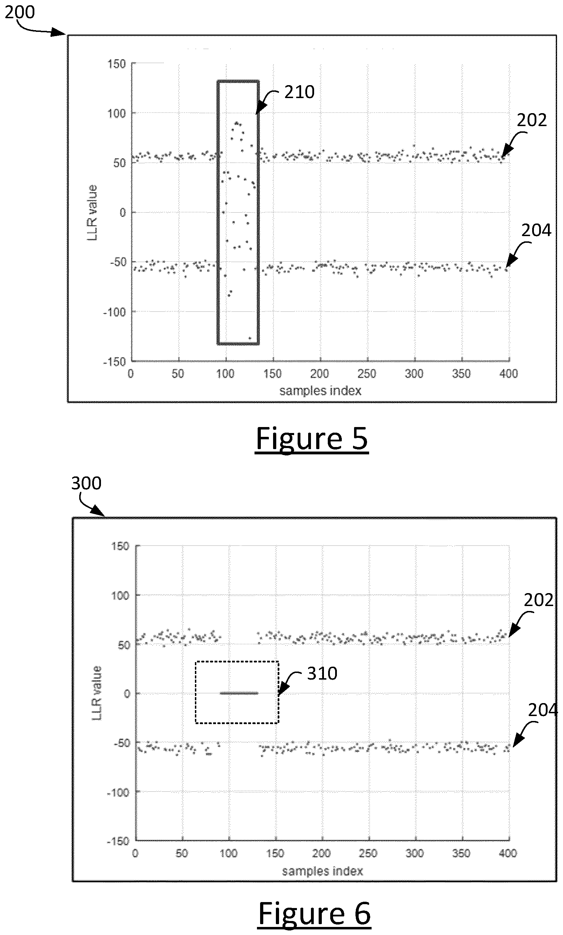

Figure 5 shows an illustrative example of a set of LLR values that may be received at the interference detector 126 from the symbol demodulator 128 in Figure 4. In this example, it is clear from statistical analysis that the majority of the LLR values 202, 204 are centered around two LLR values, +50 and -50. Accordingly, there are a number of LLR values in region 210 that appear to be outliers, possibly indicative of interference, as they do not fit this pattern. The LLR values in region 210 also correspond to a series of consecutive samples (i.e. a relatively narrow time period of the UWB transmission) rather than being distributed across the samples, which reinforces that these samples may have been affected by interference encountered at this time period (e.g., see Figure 2). In this embodiment, the interference detector 126 is configured to null (or zero) all LLR values in region 210, to mitigate the effects of said interference. In other embodiments, the LLR values in region 210 may be lowered or reduced, by multiplying said LLR values by a number between 0 and 1, rather than said values being nulled.

Figure 6 shows the processed LLR values 300 output by the interference detector 126, with the LLRs in region 210 having been nulled. The processed LLRs are then received at the block de-interleaver.

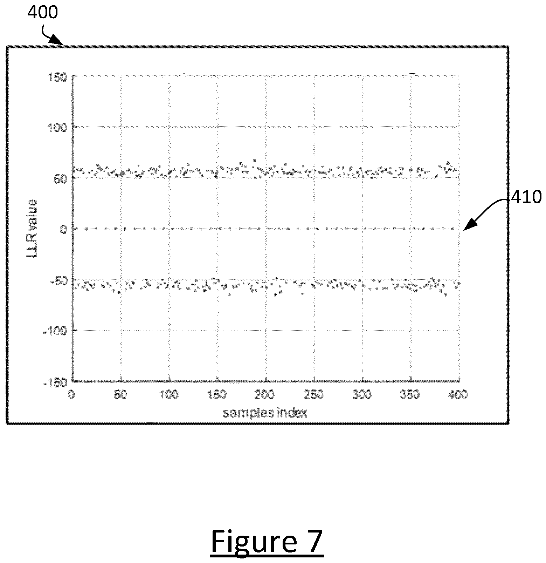

Figure 7 shows an illustrative example of the de-interleaved processed LLR values 400 output by the block de-interleaver 124, in other words, the processed LLR values 300 after being de-interleaved by the block de-interleaver 124. As shown, the zeroed or nulled LLR values are now distributed across the samples, as the sequence of the LLR values has been rearranged back to the original sequence output by the convolutional encoder 112. Thus, this means that the convolutional decoder 122 does not encounter a series of consecutive nulled LLR values, as in Figure 6, which would potentially result in the loss of the packet.

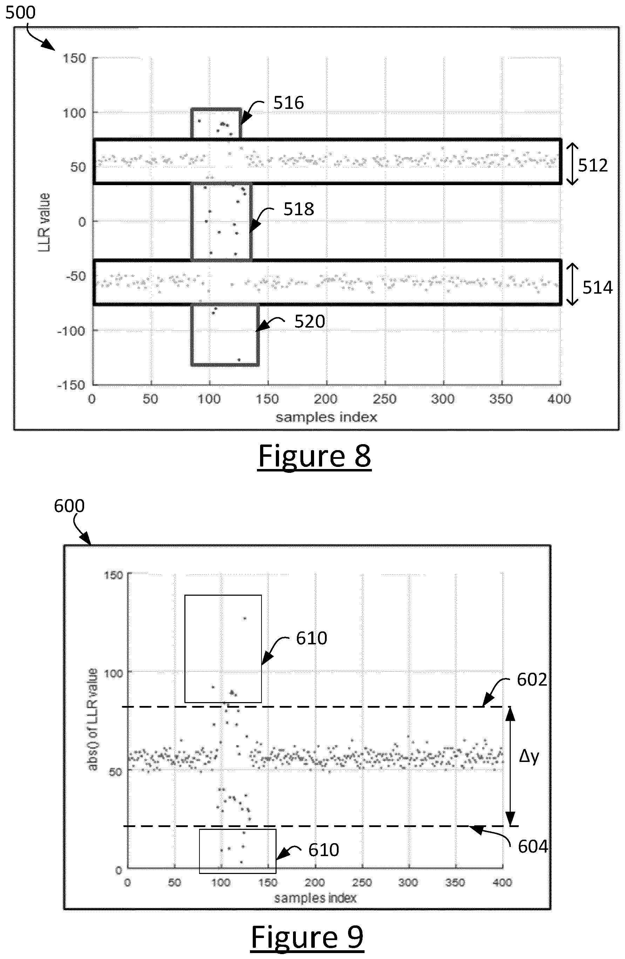

It will be appreciated that there are a variety of different statistical analysis techniques that can be used by the interference detector 126 to identify outliers that are potentially indicative of interference. In some embodiments, the interference detector 126 may be configured to analyse a received signal strength indicator (RSSI) of each UWB symbol or LLR. The received signal strength indicator may be based on the received UWB symbol power. If a suspiciously high-power region of consecutive LLR values or UWB symbols is identified in comparison to an average power of the LLRs then this may be indicative of the presence of interference in said region. Two alternative techniques are shown in Figures 8 and 9.

As shown in Figure 8, the interference detector 126 may be configured to analyse the LLR values 500 and use statistical analysis to determine a first acceptable value, a second acceptable value, and an acceptable tolerance. For example, a given percentage of the LLR values (e.g. 95%) may be located within the acceptable tolerance of either the first or second acceptable values, represented by regions 512 and 514 in Figure 8. Any LLR values falling outside of the acceptable regions 512, 514, such as the LLR values in regions 516, 518 and 520 in Figure 8, may be identified as outliers by the interference detector.

As shown in Figure 9, the interference detector 126 may be configured to analyse the absolute LLR values 600, which may be determined by calculating the modulus of each LLR value received from the symbol demodulator 128. The interference detector 126 may determine, using statistical analysis an upper threshold value 602 and a lower threshold value 604. Any LLRs falling between values 602 and 604 (i.e. within region Δy in Figure 9) may be deemed to be acceptable. For example, a given percentage of the LLR values (e.g. 95%) may be located within region Δy. Any LLRs above threshold 602 or below threshold 604 may be deemed to be outliers.

It will be appreciated that similar techniques to those shown in Figures 5 to 9 could equivalently be applied to UWB symbols rather than LLRs, in embodiments where the interference detector is operatively provided before the symbol demodulator. For example, the interference detector may be configured to determine whether the UWB symbol power is within a given tolerance of an acceptable value, the acceptable value being determined using statistical analysis.

Accordingly, there has been described systems and method for encoding and decoding UWB communication signals, wherein encoding includes block interleaving at either bit-level or symbol-level following convolutional encoding and prior to transmission, and wherein decoding includes block de-interleaving UWB symbols or LLRs prior to convolutional decoding. In some embodiments, decoding further includes detecting and nulling (or lowering) UWB symbols or LLRs determined to be affected by interference prior to block de-interleaving.

Although particular embodiments of this disclosure have been described, it will be appreciated that many modifications/additions and/or substitutions may be made within the scope of the claims.

## Claims

1. An encoder for encoding UWB communication signals for transmission, the encoder comprising:
a convolutional encoder configured to output a plurality of bits in a first sequence;
a symbol mapper, wherein the symbol mapper is configured to convert the plurality of bits into a plurality of UWB symbols; and
a block interleaver configured to:
a) receive the plurality of bits output by the convolutional encoder in the first sequence;
interleave the plurality of bits to generate a second sequence that is different to the first sequence; and
output, to the symbol mapper, the plurality of bits in the second sequence; or
b) receive the plurality of UWB symbols output by the symbol mapper in the first sequence;
interleave the plurality of UWB symbols to generate a second sequence that is different to the first sequence; and
output the plurality of UWB symbols in the second sequence.

2. The encoder of claim 1, wherein the block interleaver is configured to interleave the plurality of bits or the plurality of UWB symbols using a pattern.

3. The encoder of claim 1 or claim 2, wherein the block interleaver is a matrix interleaver.

4. The encoder of claim 1 or claim 2, wherein the block interleaver is a random or a pseudo random interleaver.

5. A decoder for decoding received UWB communication signals, the decoder comprising:
a symbol demodulator, wherein the symbol demodulator is configured to convert a plurality of UWB symbols received to a plurality of log-likelihood ratios;
a convolutional decoder configured to convert the plurality of log-likelihood ratios into a plurality of bits; and either
a) a block de-interleaver configured to:
receive the plurality of log-likelihood ratios in a first sequence;
de-interleave the plurality of log-likelihood ratios to generate a second sequence that is different to the sequence; and
output, to the convolutional decoder, the plurality of log-likelihood ratios in the second sequence; or
b) a block de-interleaver configured to:
receive the plurality of UWB symbols in a first sequence;
de-interleave the plurality of UWB symbols to generate a second sequence that is different to the sequence; and
output, to the symbol demodulator, the plurality of UWB symbols in the second sequence.

6. The decoder of claim 5, wherein the block de-interleaver is configured to output, to the convolutional decoder, the plurality of log-likelihood ratios in the second sequence, the decoder further comprising:
an interference detector configured to:
receive the plurality of log-likelihood ratios from the symbol demodulator;
process the plurality of log-likelihood ratios to determine any outliers indicative of interference;
lower or null any determined outliers; and
output processed log-likelihood ratios to the block de-interleaver.

7. The decoder of claim 6, wherein, to process the plurality of log-likelihood ratios to determine any outliers indicative of interference, the interference detector is configured to:
a) determine whether a series of consecutive log-likelihood ratio values are within a given tolerance of a first acceptable value or a second acceptable value, the first and second acceptable values being derived from statistical analysis; and
in response to a log-likelihood ratio value being outside of the given tolerance of both the first acceptable value and the second acceptable value, said log-likelihood ratio is determined to be an outlier; or
b) determine whether an absolute value of each log-likelihood ratio is within a given tolerance of an acceptable value, the acceptable value being derived from statistical analysis; and
in response to an absolute value of a log-likelihood ratio being outside of the given tolerance of the acceptable value, said log-likelihood ratio is determined to be an outlier.

8. The decoder of any one of claims 5 to 7, wherein the block de-interleaver is configured to de-interleave the plurality of log-likelihood ratios, or the processed log-likelihood ratios, using a pattern.

9. The decoder of any one of claims 5 to 8, wherein the block de-interleaver is a matrix de-interleaver.

10. The decoder of any one of claims 5 to 8, wherein the block de-interleaver is a random or a pseudo random de-interleaver.

11. An UWB communication system comprising:
an encoder according to any one of claims 1 to 4; and
a decoder according to any one of claims 5 to 10.

12. A battery management system for an electric vehicle, the battery management system comprising the UWB communication system of claim 11.

13. A method of encoding UWB communication signals for transmission, the method comprising:
outputting a plurality of bits in a first sequence from a convolutional encoder; and
either:
a) receiving the plurality of bits in the first sequence at a block interleaver;
interleaving the plurality of bits to generate a second sequence that is different to the first sequence;
outputting the plurality of bits in the second sequence from the block interleaver to a symbol mapper; and
converting, at the symbol mapper, the plurality of bits into a plurality of UWB symbols; or
b) converting the plurality of bits into a plurality of UWB symbols using a symbol mapper;
receiving the plurality of UWB symbols in the first sequence at a block interleaver;
interleaving the plurality of UWB symbols to generate a second sequence that is different to the first sequence; and
outputting the plurality of UWB symbols in the second sequence.

14. A method of decoding received UWB communication signals, the method comprising:
a) receiving, at a symbol demodulator, a plurality of UWB symbols in a first sequence;
converting the plurality of UWB symbols into to a plurality of log-likelihood ratios;
receiving, at a block de-interleaver, the plurality of log-likelihood ratios in the first sequence;
de-interleaving the plurality of log-likelihood ratios to generate a second sequence that is different to the first sequence; and
outputting the plurality of log-likelihood ratios in the second sequence from the block interleaver to a convolutional decoder; or
b) receiving, at a block de-interleaver, a plurality of UWB symbols in a first sequence;
de-interleaving the plurality of UWB symbols to generate a second sequence that is different to the first sequence;
outputting the plurality of UWB symbols in the second sequence from the block de-interleaver to a symbol demodulator;
converting, at the symbol demodulator, the plurality of UWB symbols into to a plurality of log-likelihood ratios; and
outputting the plurality of log-likelihood ratios to a convolutional decoder.

15. The method of claim 14 option a), further comprising:
receiving, from the symbol demodulator, the plurality of log-likelihood ratios at an interference detector;
processing the plurality of log-likelihood ratios at the interference detector to determine any outliers indicative of interference;
lowering or nulling any determined outliers; and
outputting processed log-likelihood ratios to the block de-interleaver.
